Europäisches Patentamt

(19) **European Patent Office**

Office européen des brevets

(11) Publication number: **0 222 228**
**B1**

(12) **EUROPEAN PATENT SPECIFICATION**

(45) Date of publication of the patent specification:
**16.08.90**

(51) Int. Cl.⁵: **F16L 37/06,** F16L 25/00,
E21B 17/02

(21) Application number: **86114730.4**

(22) Date of filing: **23.10.86**

(54) **Device for coupling and simultaneously locking of two components both radially and axially.**

(30) Priority: **08.11.85 NO 854451**

(43) Date of publication of application:
**20.05.87 Bulletin 87/21**

(45) Publication of the grant of the patent:
**16.08.90 Bulletin 90/33**

(84) Designated Contracting States:
**AT BE CH DE FR GB IT LI LU NL SE**

(56) References cited:
**DE-A- 2 803 671**
**US-A- 4 145 034**
**US-A- 4 352 511**

(73) Proprietor: **Skarpenord Control Systems a.s.,**
**Saheimsveien 2, N-3660 Rjukan(NO)**

(72) Inventor: **Sande, Kurt, Riislokka 47 A,**
**N-1600 Fredrikstad(NO)**

(74) Representative: **WILHELMS, KILIAN & PARTNER**
**Patentanwälte, Eduard-Schmid-Strasse 2,**
**D-8000 München 90(DE)**

## Description

Because of the exploitation of oil- and gas fields on even greater depths, there is a demand for devices which make possible coupling and uncoupling of components without the use of divers. Such devices must therefore be suitable for installation by remote control and must provide a good and reliable coupling of the components. The need for such a joint arises for example when coupling actuators to valves, coupling valves to pipes, coupling pipes to pipes and also coupling hydraulic/electric circuits. Such a coupling can also be used on other fields on which there is a need for a quick coupling of components.

From the DE-A 2 803 671 a pipeline connector device is known which comprises a first connector means secured to the pipeline and a second connector means secured to a subsea installation. Each of the connector means has a sealing surface. These components are connected to each other by moving one connector means relatively to the other one in a plane perpendicular to the axis of the other connector means in order to bring the sealing surfaces into a juxtaposition. Fluid actuable means are used to activate the coupling. A mechanical locking device is provided because it is fluid under pressure in the pipeline which shall be sealed.

The locking device of this connector device is very complicated constructed having a spindle which is locked to the connector means secured to the pipeline by moving many individual components and a spring system which is effected under a hydraulic pressure.

It is the object of the present invention to provide a coupling device with which a quick and reliable installation and locking of components is possible. The uncoupling should also be easy to carry out.

It is a further object of the invention to construct a coupling device which will function satisfactory by remote control and which thereby is suited for coupling and uncoupling components on greater depths of the ocean where diving operations must be avoided.

Another object of the invention is to provide a coupling device for both radially and axially locking of components.

These and other objects of the invention are attained with a construction which is characterized by the features described in the accompanying claims.

A prefered embodiment of the device according to the present invention will be described with reference to the accompanying drawings wherein:

Fig. 1 shows partly in section the embodiment of the coupling device according to the present invention for coupling an actuator and a valve,

Fig. 2 shows the lower member of the coupling device both in section and in perspective view and

Fig. 3 shows the upper member of the coupling device as a part of an actuator and the lower member fixed to a valve.

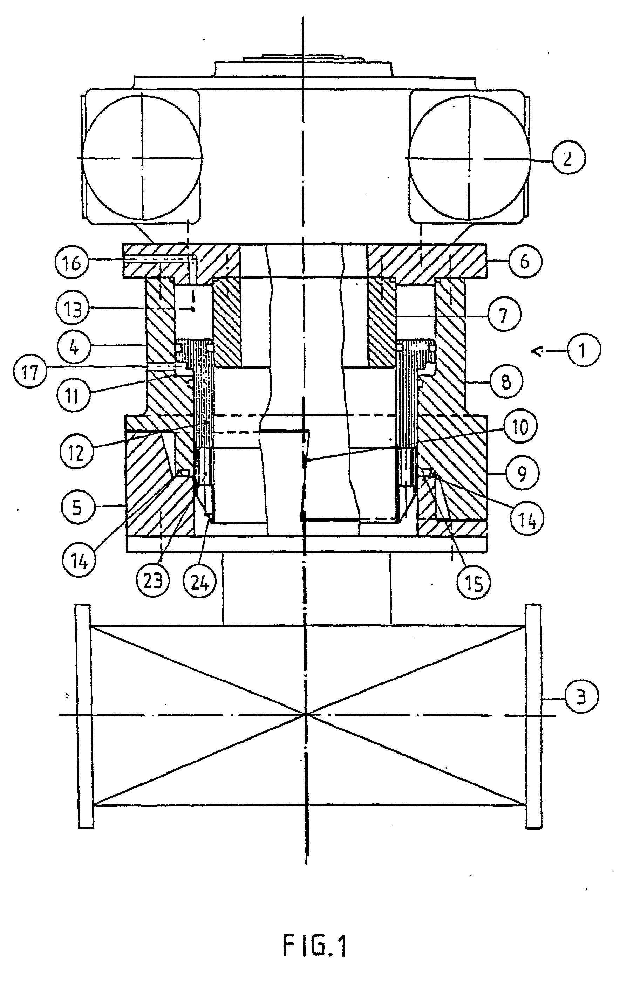

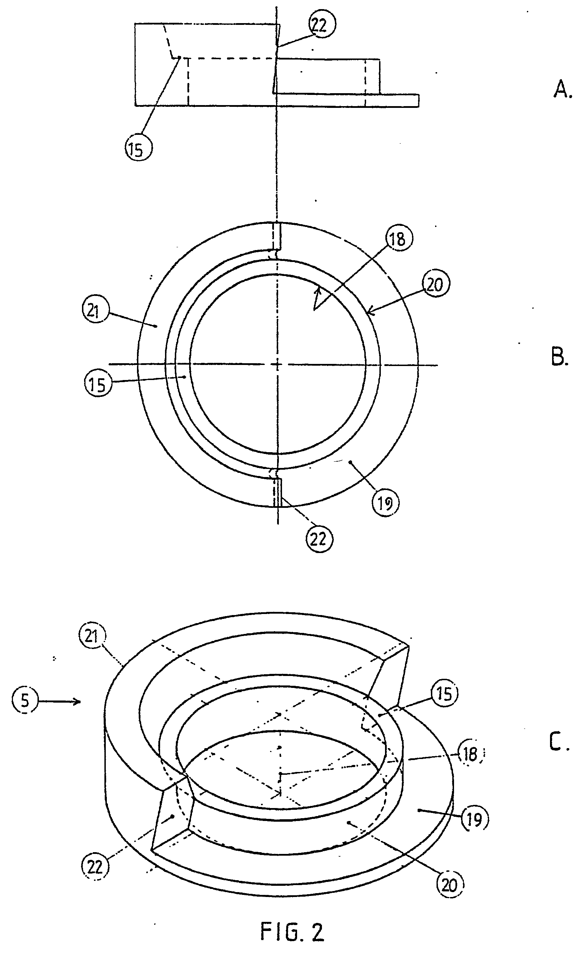

In Fig. 1 the coupling device 1 is shown activated as a coupling between two components namely an actuator 2 and a valve 3. The coupling device 1 consists of an upper coupling member 4 arranged to be fixed to one component 2 and of a lower coupling member 5 arranged to be fixed to the other component 3. The upper member 4 of the coupling consists of an upper plate 6 and an inner cylinder 7 fixed to the plate 6 and of a surrounding cylindrical part also fixed to the plate 6. The surrounding cylindrical part consists of an upper cylindrical encircling part 8 passing over to a lower cylindrical encircling part 9 with greater external diameter. The lowermost portion of the encircling part 9 is formed like a semicylinder with sloping contact faces 10 and is exactly formed like the upper portion of the lower coupling member 5 at it is described with reference to fig. 2.

The inner diameter of the upper cylindrical encircling part 8 is diminished at a point below the top end of the inner cylinder 7 such that there is formed a stop shoulder 11 for an annular piston 12. The piston 12 can thus be moved up and down in an annular chamber 13 formed between the upper plate 6, the inner cylinder 7 and the upper cylindrical encircling part 8 of the coupling. In the lower cylindrical part the inner diameter is increased such that there is formed a cylindrical flat face 14 which serves as a continuous contact face against a corresponding contact face 15 of the lower coupling member 5 (fig. 2). Both the annular piston 12 and the upper contact face 14 are fitted with O-ring sealings to ensure a tight and reliable function of each part. The upper member 4 of the coupling device is as well provided with flow passages 16, 17 for a hydraulic fluid.

Fig. 2 shows the lower coupling member 5, wherein the technical details of the upper and the lower member 4, 5, which are identical are shown in fig. 2A, B and C.

Fig. 2A shows the lower member 5 of the coupling in a side view, Fig. 2B shows the lower member 5 of the coupling seen from above, and Fig. 2C shows the lower member of the coupling in a perspective view. The lower member 5 of the coupling is cylindrical having a through-going axial opening 18. The upper member 4 of the coupling has also an opening 18 with same diameter. One half of the lower member 5 is formed as a semicircular disc 19 which passes over to an upstanding semicylindrical part 20 with smaller diameter. The top face of this part 20 makes a inner semicylindrical turned continuous face in the other half of the lower member 5 of the coupling. This face 15 will come into contact with the corresponding face 14 of the upper member 4 of the coupling when the coupling is activated. The other half of the lower member 5 of the coupling is made of a semicylindrical upstanding collar 21 which is higher than the other half of the lower member 5 and which at the inside is sloping towards the face 15. The collar 21 has sloping contact faces 22 which will come into contact with the corresponding sloping contact faces 10 (Fig. 1) of the upper member 4 of the coupling.

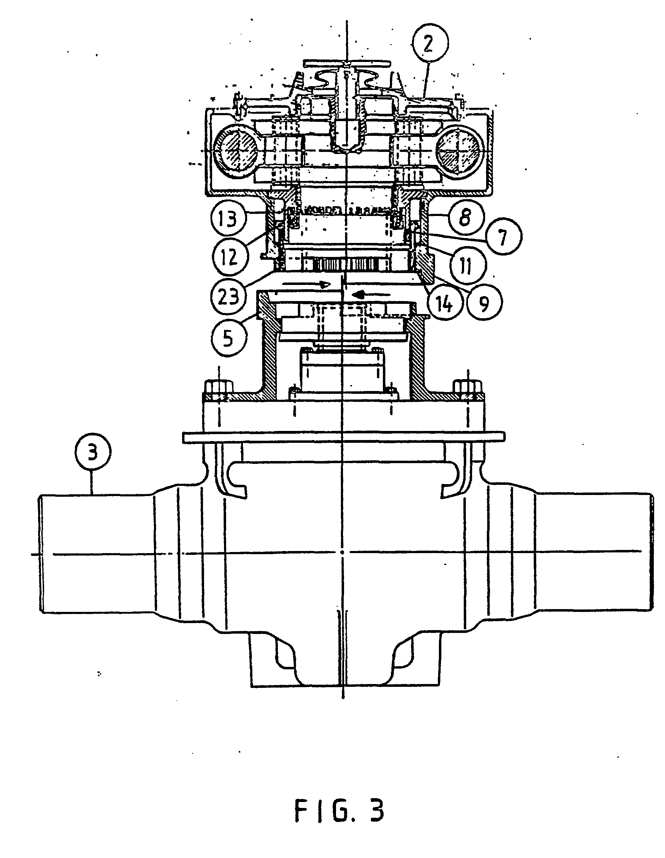

Furthermore, the coupling is equipped with a locking ring 23 (Fig. 1 and 3) which is fixed to the annular piston 12. By the coupling procedure the two members 4 and 5 of the coupling are arranged axially to each other such that the plane faces 14 and 15 are in contact physically. Because the sloping contact faces 10 and 22 have to pass each other when placing the members 4, 5 together, the two members 4 and 5 of the coupling will be in an eccentric position to each other (between 8 and 12 mm). The real locking function occurs when the annular piston 12 moves the locking ring 23 from a starting point in the upper member 4 of the coupling into the opening 18 in the lower member 5 of the coupling. The lower portion of the locking ring 23 is formed like a cone 24. This cone 24 ensures that the two members 4 and 5 of the coupling will always be brought together by a radial movement if the two members 4, 5 of the coupling are at the beginning placed onto each other such that the part of the cone 24 having the smallest diameter is inserted into the opening 18 in the lower member 5 of the coupling. The cone 24 of the locking ring 23 will enter into the opening 18 in order to entirely center both members 4, 5 of the coupling.

However, the sloping contact faces 10 and 22 are positioned such that there is a certain eccentricity (between 0,2 mm and 0,6 mm). Thereby a prestressing of the sloping contact faces 10 and 22 against each other is obtained. As a result the locking ring 23 will be pressed against one side of the wall of the opening 18 in the lower member 5 of the coupling and a friction force directed against the motion of the locking ring 23 will arise. When this friction force is equal to the force generated by the hydraulically driven annular piston 12, the movement of the locking ring 23 will stop. The locking ring 23 in this position, as shown in Fig. 1, physically prevents that the contact faces 10 and 22 can radially separate. The inclined position of the contact faces 10 and 22 locks the two members 4, 5 to each other in such a way that they cannot separate axially as long as the locking ring 23 remains in its position shown in Fig. 1.

When a disconnection is desired, the locking ring 23 is moved back to the upper member 4 of the coupling whereby the two members 4 and 5 of the coupling get free and can separate. The use of a hydraulic equipment to move the annular piston 12 backwards and forwards, makes remote control of the operation possible.

In Fig. 3 the upper member 4 of the coupling is shown as a part of a actuator 2 and the lower member 5 is coupled to a valve 3. The arrows in Fig. 3 show the necessary eccentricity of the sloping faces 10, 22 (8-12 mm).

## Claims

1. A device for coupling and simultaneously locking of two components (2, 3) both radially and axially, especially for coupling of actuators to valves, comprising a first coupling member (4) arranged to be fixed to one component (2) and a second coupling member (5) arranged to be fixed to the other component (3), the two coupling members (4, 5) being cylindrical and having an axial bore (18) therethrough and being provided with sloping contact surfaces (10, 22) respectively, which by their axially inclined position lock the coupling members (4, 5) together, wherein one coupling member (4) is provided with an annular piston (12) and with a locking ring (23) fixed to the piston (12) for engaging the bore (18) of the other coupling member (5).

2. A device according to claim 1, characterized in that the two contact surfaces (10, 22) are positioned such that the locking ring (23) causes the two contact surfaces (10, 22) to be in tight prestressed contact when the coupling members (4, 5) are in a locked position.

3. A device according to claim 1, characterized in that the first coupling member (4) comprises a circular plate (6), an inner cylinder (7) fixed to the plate (6) and a surrounding cylindrical part also fixed to the plate (6), the surrounding cylindrical part including an upper cylindrical portion (8) surrounding the inner cylinder (7) and a lower cylindrical portion (9) having formed therein a semicylindrical portion defining the first contact surface (10).

4. A device according to claim 3, characterized in that the inner cylinder (7) and the upper cylindrical portion (8) define an annular chamber (13) therebetween in which the annular piston (12) is mounted for axial movement.

5. A device according to claim 3, characterized in that the first coupling member (4) is provided with flow passages (16, 17) for a hydraulic fluid.

6. A device according to claim 3, characterized in that the upper cylindrical portion (8) has a stop shoulder (11) limiting the axial movement of the annular piston (12).

7. A device according to claim 1, characterized in that the second coupling member (5) comprises a cylinder (21) having a semicylindrical portion defining the second contact surface (22) and a semicircular disc (19), and a semicylindrical part (20) extending axially from the inner periphery of the semicircular disc (19) and having an end surface (15) continuing around the inner periphery of the cylinder (21).

8. A device according to claim 1, characterized in that the circumferential portions and the contact surfaces (10, 22) of the first and second coupling members (4, 5) are complementary.

9. A device according to claim 1, characterized in that the locking ring (23) has an outer conical surface.

## Patentansprüche

1. Vorrichtung zum Koppeln und gleichzeitigen Verriegeln von zwei Bauteilen (2, 3) sowohl radial als auch axial, insbesondere zum Koppeln von Stellgliedern mit Ventilen, welche ein erstes Kopplungselement (4), das so ausgebildet ist, daß es an einem Bauteil (2) befestigt werden kann, und ein zweites Kopplungselement (5) umfaßt, das so ausgebildet ist, daß es am anderen Bauteil (3) befestigt werden kann, wobei die beiden Kopplungselemente (4, 5) zylindrisch ausgebildet sind und eine hindurchgehende axiale Bohrung (18) haben und mit schrägen Kontaktflächen (10, 22) jeweils versehen sind, die durch ihre axial geneigte Lage die Kopplungselemente (4, 5) miteinander verriegeln, wobei ein Kopplungselement (4) mit einem ringförmigem Kolben (12) und mit einem Verriegelungsring (23) versehen ist, der am Kolben (12) befestigt ist, um in die Bohrung (18) des anderen Kopplungselementes (5) einzugreifen.

2. Vorrichtung nach Anspruch 1, dadurch gekennzeichnet, daß die beiden Kontaktflächen (10, 22) so angeordnet sind, daß der Verriegelungsring (23) bewirkt, daß die beiden Kontaktflächen (10, 22) in einem festen vorgespannten Kontakt stehen, wenn die Kopplungselemente (4, 5) sich in der verriegelten Lage befinden.

3. Vorrichtung nach Anspruch 1, dadurch gekennzeichnet, daß das erste Kopplungselement (4) eine kreisförmige Platte (6), einen inneren Zylinder (7), der an der Platte (6) befestigt ist, und einen gleichfalls an der Platte (6) befestigten umgebenden Zylinderteil umfaßt, wobei der umgebende Zylinderteil einen oberen zylindrischen Teil (8), der den inneren Zylinder (7) umgibt, und einen unteren zylindrischen Teil (9) einschließt, in dem ein halbzylindrischer Teil ausgebildet ist, der die erste Kontaktfläche (10) bildet.

4. Vorrichtung nach Anspruch 3, dadurch gekennzeichnet, daß der innere Zylinder (7) und der obere zylindrische Teil (8) eine Ringkammer (13) dazwischen begrenzen, in der der ringförmige Kolben (12) axial bewegbar angebracht ist.

5. Vorrichtung nach Anspruch 3, dadurch gekennzeichnet, daß das erste Kopplungselement (4) mit Strömungskanälen (16, 17) für ein hydraulisches Fluid versehen ist.

6. Vorrichtung nach Anspruch 3, dadurch gekennzeichnet, daß der obere zylindrische Teil (8) eine Anschlagschulter (11) aufweist, die die axiale Bewegung des ringförmigen Kolbens (12) begrenzt.

7. Vorrichtung nach Anspruch 1, dadurch gekennzeichnet, daß das zweite Kopplungselement (5) einen Zylinder (21) mit einem halbzylindrischen Teil, der die zweite Kontaktfläche (22) und eine halbkreisförmige Scheibe (19) bildet, und einen halbzylindrischen Teil (20) umfaßt, der axial vom Innenumfang der halbkreisförmigen Scheibe (19) ausgeht und eine Stirnfläche (15) aufweist, die sich um den inneren Umfang des Zylinders (21) fortsetzt.

8. Vorrichtung nach Anspruch 1, dadurch gekennzeichnet, daß die Umfangsabschnitte und die Kontaktflächen (10, 22) des ersten und des zweiten Kopplungselementes (4, 5) zueinander komplementär sind.

9. Vorrichtung nach Anspruch 1, dadurch gekennzeichnet, daß der Verriegelungsring (23) eine äußere konische Fläche hat.

## Revendications

1. Dispositif simultané d'accouplement et de verrouillage à la fois radialement et axialement de deux composants (2, 3) destinés plus particulièrement à l'accouplement d'actionneurs de valves, comprenant un premier organe d'accouplement conçu pour être fixé à un composant (2) et un second organe d'accouplement (5) conçu pour être à l'autre composant (3), les deux organes d'accouplement (4, 5) étant cylindriques et possédant un alésage axial (18) traversant et étant pourvus respectivement de surfaces de contact inclinées (10, 22), qui du fait de leurs positions inclinées axialement verrouillent entre eux les organes d'accouplement (4, 5), caractérisé en ce qu'un organe d'accouplement (4) est pourvu d'un piston annulaire (12) et d'un anneau de verrouillage (23) fixé au piston (12) pour venir en contact avec l'alésage (18) de l'autre organe d'accouplement (5).

2. Dispositif selon la revendication 1, caractérisé en ce que les deux surfaces de contact (10, 22) sont positionnées de manière telle que l'anneau de verrouillage (23) entraîne les deux surfaces de contact (10, 22) à être en contact serré avec précontrainte lorsque les organes d'accouplement (4, 5) sont dans une position verrouillée.

3. Dispositif selon la revendication 1, caractérisé en ce que le premier organe d'accouplement (4) comporte une plaque circulaire (6), un cylindre intérieur (7) fixé à la plaque (6) et une partie cylindrique formant enveloppe également fixée à la plaque (6), la partie cylindrique formant enveloppe comportant une partie cylindrique supérieure (8) entourant le cylindre intérieur (7) et une partie cylindrique inférieure (9) dans laquelle est formée une partie semi cylindrique définissant la première surface de contact (10).

4. Dispositif selon la revendication 3, caractérisé en ce que le cylindre intérieur (7) et la partie cylindrique supérieure (8) définissent une chambre annulaire (13) entre-eux, dans laquelle le piston annulaire (12) est monté pour avoir un mouvement axial.

5. Dispositif selon la revendication 3, caractérisé en ce que le premier organe d'accouplement (4) est muni de passages d'écoulement (16, 17) d'un fluide hydraulique.

6. Dispositif selon la revendication 3, caractérisé en ce que la partie cylindrique supérieure (8) possède un épaulement (11) de butée limitant le mouvement axial du piston annulaire (12).

7. Dispositif selon la revendication 1, caractérisé en ce que le second organe d'accouplement (5) comporte un cylindre (21) ayant une partie semi cylindrique définissant la seconde surface de contact (22) et un disque semi circulaire (19), et une partie semi cylindrique (20) s'étendant axialement à partir de la périphérie intérieure du disque semi circulaire (19) et ayant une surface d'extrémité (15) continuant autour de la périphérie intérieure du cylindre (21).

8. Dispositif selon la revendication 1, caractérisé en ce que les parties circonférentielles et les surfaces de contact (10, 22) du premier et du second organe d'accouplement (4, 5) sont complémentaires.

9. Dispositif selon la revendication 1, caractérisé en ce que l'anneau de verrouillage (23) possède une surface extérieure cônique.

FIG.1

A.

B.

C.

FIG. 2

FIG. 3